# FASCICULE DE BREVET EUROPEEN

(11) **EP 0 509 923 B1**
(45) Date de publication et mention de la délivrance du brevet: **05.07.1995**
(21) Numéro de dépôt: 92401064.8
(22) Date de dépôt: 15.04.1992
(51) Int. Cl.: G21D 1/02, G05D 9/02

(54) **Réacteur nucléaire refroidi par de l'eau sous pression comportant un dispositif de vidange du circuit primaire à sécurité intrinsèque à niveau bas déterminé**
Druckwasserkernreaktor, der eine Einrichtung zur Entwässerung des Primärkreislaufs mit einem bestimmten Tiefstand mit einer Selbstsicherung aufweist
Pressurized water nuclear reactor comprising a primary coolant draining system with an intrinsic determined low water level safety

(30) Priorité: 17.04.1991 FR 9104728
(43) Date de publication de la demande: 21.10.1992
(73) Titulaire: FRAMATOME, 92400 Courbevoie (FR)
(72) Inventeur: Faucher, Dominique, F-92220 Bagneux (FR); Vigroux, Odile, F-92370 Chaville (FR); Couturier, Michel, F-78290 Croissy-Sur-Seine (FR); Fournier, Yvon, F-75018 Paris (FR)
(74) Mandataire: Bouget, Lucien

(56) Documents cités:
- DE-A- 3 417 198
- FR-A- 2 356 195
- JP-A-58 077 698
- JP-A-62 255 704
- PATENT ABSTRACTS OF JAPAN vol. 14, no. 416 (M-1021)(4359) 7 Septembre 1990 & JP-A-2 161 108

## Description

L'invention concerne un réacteur nucléaire refroidi par de l'eau sous pression comportant un dispositif de vidange du circuit primaire à sécurité intrinsèque de niveau bas.

Les réacteurs nucléaires à eau sous pression comportent une cuve renfermant le coeur du réacteur et un circuit primaire ayant au moins deux boucles comprenant chacune au moins un générateur de vapeur, une pompe et des canalisations de liaison. Les canalisations de liaison mettent en communication la partie primaire des générateurs de vapeur et la pompe avec le volume interne de la cuve.

Pendant le fonctionnement du réacteur nucléaire, de l'eau à une température voisine de 315°C et à une pression de l'ordre de 155 bars constituant le fluide de refroidissement du réacteur circule dans le circuit primaire et dans la cuve, de manière à assurer le refroidissement des assemblages du coeur à l'intérieur de la cuve et l'échauffement et la vaporisation d'eau d'alimentation à l'intérieur des générateurs de vapeur.

Il peut être nécessaire d'effectuer périodiquement des arrêts du réacteur nucléaire, par exemple pour rechargement du coeur avec des assemblages combustibles ou pour effectuer certaines opérations d'entretien ou de réparation des composants du réacteur.

L'arrêt du réacteur est obtenu en plaçant des grappes de commande et d'arrêt absorbant les neutrons dans leur position d'insertion maximale dans le coeur du réacteur. On effectue ensuite la dépressurisation et le refroidissement du circuit primaire, jusqu'au moment où la pression de l'eau de refroidissement contenue dans le circuit primaire est voisine de la pression atmosphérique. Il devient alors possible d'ouvrir le couvercle de la cuve, et de remplir d'eau la piscine du réacteur située au-dessus de la cuve.

Pendant toute la phase d'arrêt du réacteur, appelée "arrêt à froid", il est nécessaire de faire circuler de l'eau de refroidissement au contact du coeur du réacteur, de manière à évacuer la chaleur produite par le coeur qui présente une certaine activité résiduelle. De l'eau de refroidissement est mise en circulation dans certaines parties du circuit primaire et dans la cuve, grâce à un circuit auxiliaire appelé "circuit de refroidissement du réacteur à l'arrêt (RRA)" qui comporte des pompes de circulation et des échangeurs de chaleur assurant le refroidissement de l'eau.

Pour procéder à certaines interventions sur le circuit primaire ou dans la cuve, par exemple pour réaliser des opérations d'inspection ou des travaux sur les générateurs de vapeur, les pompes primaires, les tuyauteries ou l'instrumentation, il peut être nécessaire de vidanger partiellement le circuit primaire alors qu'il se trouve en arrêt à froid.

Pour effectuer des opérations telles que la vidange des épingles du faisceau d'échange et le balayage en air des générateurs de vapeur, ou encore la pose de tapes d'obturation dans les boîtes à eau des générateurs de vapeur, le niveau de l'eau de refroidissement dans les boucles du circuit primaire doit être abaissé et stabilisé tout en assurant le bon fonctionnement du circuit de refroidissement à l'arrêt du réacteur. Il est donc nécessaire d'abaisser et de régler le niveau de l'eau de refroidissement pour que ce niveau se situe dans une zone appelée plage de travail basse du circuit RRA. Le niveau doit se maintenir entre un seuil haut déterminé de telle sorte qu'on évite toute remontée d'eau dans les boîtes à eau des générateurs de vapeur afin de permettre une éventuelle intervention en toute sécurité du personnel et un seuil bas choisi de manière à protéger les pompes du circuit RRA vis-à-vis de l'apparition d'un vortex qui se traduit par un brassage d'un mélange air-eau par les pompes, ce qui peut entraîner à terme la destruction de ces pompes.

En cas d'apparition du vortex, l'ensemble des pompes du circuit RRA qui sont en service simultanément risque de se trouver désamorcé et arrêté au même moment. On aboutit alors à une perte totale du refroidissement du circuit primaire par le circuit RRA.

Il est donc indispensable, lors des opérations de vidange partielle du circuit primaire, le combustible n'étant pas déchargé, de maintenir le niveau de l'eau de refroidissement dans ce circuit au-dessus du seuil bas déterminé par les conditions de fonctionnement des pompes du circuit RRA.

On connaît actuellement plusieurs méthodes différentes de vidange du circuit primaire d'un réacteur nucléaire à eau sous pression en arrêt à froid pour intervention.

Une première méthode consiste à réaliser la vidange par l'intermédiaire du circuit RRA. L'eau du circuit primaire sort par une branche chaude et passe à travers les pompes et les échangeurs du circuit RRA ; une partie de cette eau primaire est alors prélevée dans une canalisation de liaison entre le circuit RRA et le circuit de traitement chimique et volumétrique RCV, grâce à une vanne permettant d'en régler le débit.

L'eau prélevée traverse le circuit RCV et une vanne à trois voies permet de diriger l'eau prélevée vers le circuit de traitement des effluents primaires du réacteur (TEP). Du fait qu'une partie du fluide prélevé n'est pas recyclée dans le circuit primaire, on obtient une baisse progressive du niveau de l'eau de refroidissement dans ce circuit.

Une seconde méthode consiste à effectuer la vidange par l'intermédiaire d'un piquage raccordé à une canalisation d'une boucle du circuit primaire joignant un générateur de vapeur et une pompe primaire, cette canalisation ayant la forme d'un U disposé dans un plan vertical et le piquage relié à la branche centrale inférieure du U, au point le plus bas de la canalisation étant raccordé au circuit de récupération des purges et évents du réacteur (RPE). Le fluide prélevé dans le piquage est envoyé soit vers le traitement des drains résiduaires (partie du RPE), par gravité, soit vers le circuit TEP par une pompe. Il existe également un moyen de vidange à grand débit par le PTR (Traitement de refroidissement des eaux des piscines) utilisé théoriquement uniquement en début de vidange.

Dans tous les cas, il est nécessaire de prévoir un moyen de surveillance du niveau dans le circuit primaire du réacteur. La vidange est arrêtée lorsque le niveau repéré se situe dans la plage de travail basse des pompes du circuit RRA.

En fait, de nombreux incidents ont eu lieu, pendant la vidange du circuit primaire de réacteurs nucléaires, du fait de vidanges trop importantes ayant entraîné un désamorçage des pompes du circuit RRA par effet vortex. Ces vidanges trop importantes du circuit primaire résultaient d'une mauvaise évaluation du niveau dans le circuit primaire, le niveau mesuré étant différent du niveau réel dans les canalisations.

On connaît par le DE-A-34 17 198, un dispositif de vidange du circuit primaire d'un réacteur nucléaire à eau sous pression permettant d'effectuer une vidange complète sans qu'il subsiste de dépôts de corrosion radioactifs dans le circuit. Le dispositif comporte une conduite en dérivation par rapport à une pompe primaire reliée à l'une de ses extrémités à la partie supérieure d'une branche froide et à son autre extrémité à la partie inférieure d'une branche en U joignant la pompe primaire à un générateur de vapeur. La vidange est effectuée à partir d'une capacité constituée par une partie élargie de la conduite en dérivation, située au point le plus bas de la conduite, à un niveau très inférieur au niveau de la partie supérieure de la branche froide. Un tel dispositif ne permet évidemment pas de maintenir le niveau dans le circuit primaire à un niveau bas assurant un fonctionnement satisfaisant des pompes du circuit de refroidissement à l'arrêt du réacteur.

Le but de l'invention est donc de proposer un réacteur nucléaire refroidi par de l'eau sous pression comportant une cuve renfermant le coeur du réacteur, un circuit primaire ayant au moins deux boucles comprenant au moins un générateur de vapeur, une pompe et des canalisations mettant en communication la partie primaire du générateur de vapeur et la pompe l'une avec l'autre et avec le volume interne de la cuve et un dispositif de vidange du circuit primaire du réacteur à l'arrêt et en cours de refroidissement par circulation d'eau dans un circuit de refroidissement auxiliaire et à l'intérieur de la cuve, par l'intermédiaire d'au moins une tuyauterie de prélèvement d'eau dans le circuit primaire reliée à un circuit d'évacuation de l'eau prélevée, de manière que le niveau de l'eau dans le circuit primaire à la fin de la vidange reste au moins égal à un niveau bas déterminé, le dispositif de vidange comportant au moins une capacité reliée à un constituant du circuit primaire tel qu'une canalisation, en deux points du constituant à des niveaux différents dont l'un est situé en-dessous du niveau bas et dont l'autre est situé au niveau bas ou au-dessus, le dispositif de vidange permettant d'éviter que le niveau dans le circuit primaire ne descende en-dessous du seuil bas assurant un fonctionnement satisfaisant des pompes du circuit RRA, même en cas de défaillance du matériel ou d'erreur de l'opérateur.

Dans ce but, la capacité est reliée, au voisinage de sa partie inférieure et au voisinage de sa partie supérieure, respectivement, au constituant du circuit primaire en ses deux points et la tuyauterie de prélèvement débouche dans la capacité à un niveau correspondant au niveau bas, de telle sorte que le niveau de l'eau dans la capacité s'équilibre par rapport au niveau dans le circuit primaire, lorsque l'eau est au niveau bas dans le circuit primaire, la tuyauterie de prélèvement débouchant alors dans une partie de la capacité recevant de l'air d'éventage du circuit primaire.

Afin de bien faire comprendre l'invention, on va maintenant décrire, à titre d'exemples non limitatifs, en se référant aux figures jointes en annexe, un réacteur nucléaire à eau sous pression comprenant un dispositif de vidange suivant l'invention et suivant plusieurs modes de réalisation, et sa mise en oeuvre pour réaliser la vidange d'un circuit primaire d'un réacteur nucléaire à eau sous pression, comparativement aux méthodes de vidange selon l'art antérieur.

La figure 1 est une vue schématique de la cuve et du circuit primaire d'un réacteur nucléaire à eau sous pression comportant des dispositifs permettant de réaliser la vidange du circuit primaire, suivant les méthodes connues de l'art antérieur.

La figure 2 est une vue schématique de la cuve et du circuit primaire d'un réacteur nucléaire à eau sous pression comportant un dispositif de vidange suivant l'invention.

La figure 3 est une vue en élévation d'un dispositif de vidange suivant l'invention et suivant un premier mode de réalisation.

La figure 4 est une vue en élévation d'un dispositif de vidange suivant l'invention et suivant une variante de réalisation du dispositif représenté sur la figure 3.

La figure 5 est une vue en élévation d'un dispositif de vidange suivant l'invention et suivant un second mode de réalisation.

La figure 6 est une vue en élévation d'un dispositif de vidange suivant l'invention et suivant une variante de réalisation du dispositif représenté sur la figure 5.

La figure 7 est une vue schématique de la cuve et d'une partie du circuit primaire d'un réacteur nucléaire auxquels sont associés des dispositifs de vidange suivant l'invention.

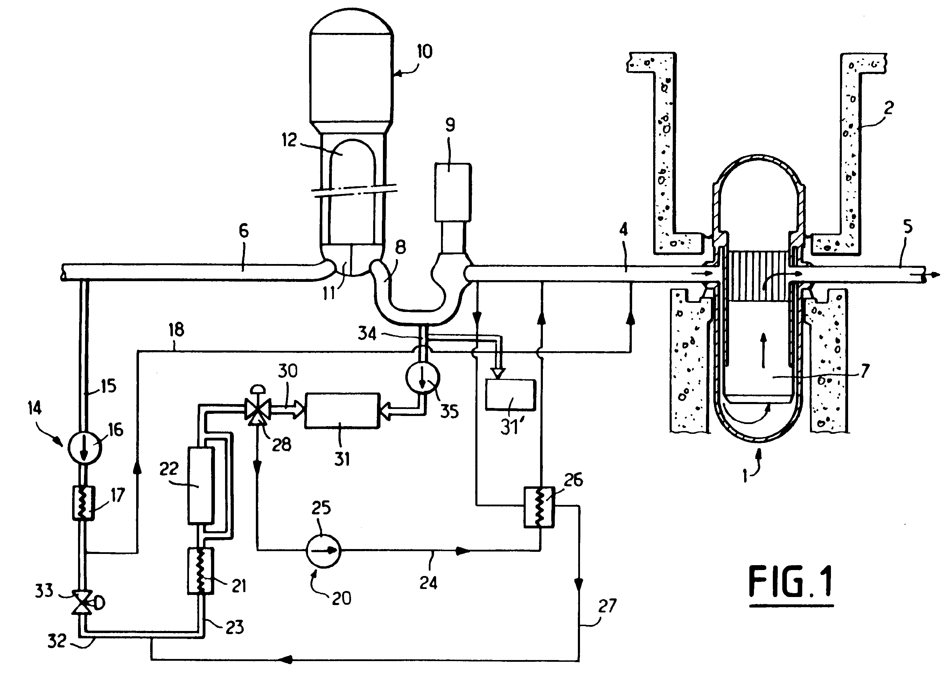

Sur la figure 1, on voit la cuve 1 d'un réacteur nucléaire à eau sous pression disposée à l'intérieur de la structure en béton 2 du réacteur et renfermant le coeur 7 du réacteur nucléaire. La cuve 1 est reliée à des canalisations de grand diamètre telles que les canalisations 4, 5 et 6 qui sont des éléments du circuit primaire assurant la circulation d'eau sous pression de refroidissement à l'intérieur de la cuve 1, en contact avec le coeur 7.

Le circuit primaire du réacteur comporte plusieurs boucles et généralement deux à quatre boucles comprenant chacune un générateur de vapeur 10 et une pompe primaire 9 assurant la circulation de l'eau de refroidissement dans la boucle.

Chacune des boucles comporte une canalisation telle que 5 ou 6 appelée branche chaude, mettant en communication la boîte à eau 11 du générateur de vapeur avec le volume intérieur de la cuve 1, une canalisation telle que 4, appelée branche froide mettant en communication la pompe primaire 9 avec le volume intérieur de la cuve 1 et une branche intermédiaire appelée branche en U 8, reliant la boîte à eau 11 du générateur de vapeur 10 et la pompe primaire 9.

L'eau de refroidissement sous pression du réacteur nucléaire échauffée au contact du coeur 7 sort de la cuve par une branche chaude et pénètre dans la partie primaire du générateur de vapeur 10 comportant la boîte à eau 11 et l'espace intérieur des tubes du faisceau 12 du générateur de vapeur. L'eau de refroidissement circulant à l'intérieur des tubes du faisceau 12 du générateur de vapeur assure l'échauffement et la vaporisation d'eau d'alimentation et subit, de ce fait, un certain refroidissement. L'eau sous pression refroidie est récupérée à la sortie de la partie primaire du générateur de vapeur 10 et est aspirée dans la branche en U 8 par la pompe 9 et refoulée dans une branche froide 4 pour être réintroduite dans la cuve 1 où elle assure le refroidissement du coeur 7.

Lorsque le réacteur nucléaire est mis à l'arrêt les grappes absorbantes de commande et d'arrêt étant en position d'insertion maximale dans le coeur 7, le refroidissement et la dépressurisation du réacteur sont effectués grâce au générateur de vapeur puis en utilisant un circuit de refroidissement du réacteur à l'arrêt (circuit RRA) désigné de manière générale par le repère 14.

Le circuit RRA permet de réaliser le refroidissement continu de l'eau du circuit primaire et le prélèvement de la chaleur produite par le coeur qui présente une activité résiduelle, après l'arrêt.

Sur la figure 1, le circuit primaire du réacteur a été représenté dans une phase où le réacteur est en arrêt à froid pour intervention.

Le circuit RRA 14 comporte par exemple une tuyauterie de prélèvement 15 reliée à une branche chaude 6 d'une boucle du circuit primaire, au moins une pompe 16 et un échangeur de chaleur 17 intercalés sur la tuyauterie de prélèvement 15 ainsi qu'une ou plusieurs tuyauteries 18 de recyclage de l'eau primaire refroidie dans les échangeurs 17 du circuit RRA, dans une branche froide 4.

Dans le cas d'un réacteur nucléaire à quatre boucles, le circuit RRA comporte au moins deux tuyauteries de prélèvement telles que la tuyauterie 15 reliées aux branches chaudes de deux boucles du circuit primaire et deux conduites de recyclage telles que la conduite 18 reliées aux branches froides des deux autres boucles du circuit primaire.

Dans le cas d'un réacteur nucléaire à trois boucles, le circuit RRA comporte une ou plusieurs tuyauteries d'aspiration telle que la tuyauterie 15 reliées à la branche chaude de l'une des boucles du circuit primaire et deux tuyauteries de recyclage telles que la tuyauterie 18 reliées aux branches froides des deux autres boucles du circuit primaire.

Comme il est visible sur la figure 1, le réacteur nucléaire comporte également un second circuit désigné de manière générale par le repère 20, associé au circuit primaire et permettant d'effectuer entre autres un réglage des caractéristiques chimiques de l'eau de refroidissement du réacteur et de compenser éventuellement des fuites qui seraient apparues sur le circuit primaire pendant le fonctionnement du réacteur.

Le circuit 20 ou circuit de contrôle volumétrique et chimique du réacteur (RCV) comporte, sur une tuyauterie de prélèvement 23, un échangeur de chaleur 21, un module de purification de l'eau primaire 22 et, sur une tuyauterie de recyclage d'eau dans le circuit primaire reliée à une branche froide 4, une ou plusieurs pompes de charge 25 et un échangeur de chaleur 26.

La tuyauterie de prélèvement 23 est reliée à une tuyauterie de décharge 27 connectée à une branche froide 4 à son extrémité opposée à la tuyauterie de prélèvement 23. La conduite de décharge 27 du RCV est reliée au second échangeur de chaleur 26, de manière que l'eau primaire prélevée sur la branche 4, par l'intermédiaire des tuyauteries 27 et 23, assure le réchauffage de l'eau primaire qui est renvoyée dans la branche froide 4 par la tuyauterie 24, à la sortie du circuit RCV.

Le circuit RCV comporte des composants qui n'ont pas été représentés sur la figure 1 tels que des réservoirs de stockage d'eau et de constituants chimiques permettant de régler la composition du fluide de refroidissement et d'effectuer des ajustements volumétriques.

Une vanne à trois voies 28 est disposée sur le circuit RCV, l'une des voies de la vanne 28 étant reliée à la tuyauterie 23, une seconde voie à la tuyauterie 24 et une troisième voie à une tuyauterie 30 reliée à un circuit 31 de traitement des effluents primaires (TEP) qui n'a été représenté que de manière symbolique sur la figure 1.

De plus, le circuit RCV 20 est relié au circuit RRA 14 par une tuyauterie de liaison 32 sur laquelle est disposée une vanne de réglage 33 joignant la tuyauterie 15 du circuit RRA à la tuyauterie 23 du circuit RCV.

Le réacteur nucléaire comporte également un circuit de récupération des purges et évents qui permet en particulier de réaliser la vidange complète du circuit primaire. Le circuit RPE comporte par exemple un piquage 34 relié à la branche en U 8, au point le plus bas de cette branche en U, une pompe d'aspiration 35 et une tuyauterie de liaison au circuit de traitement des effluents primaires 31. Il comporte également une tuyauterie de liaison au traitement des drains résiduaires (partie du RPE) 31′.

Les procédés de vidange partielle du circuit primaire selon l'art antérieur mettent en oeuvre certains composants du circuit RRA et certains composants du circuit RCV ou encore certains composants du circuit RPE ou du PTR, comme il sera décrit ci-dessous.

Une première méthode consiste à prélever l'eau du circuit primaire par l'intermédiaire des tuyauteries 15, 32 et 23, le débit prélevé étant réglé grâce à la vanne 33. Le débit circulant dans le circuit RRA diminué du débit prélevé dans la tuyauterie de liaison 32 est recyclé dans le circuit primaire par la tuyauterie 18.

La vanne à trois voies 28 permet de diriger le débit prélevé circulant dans le circuit RCV 20, vers le circuit TEP, par l'intermédiaire de la tuyauterie 30. Une partie de l'eau primaire est ainsi évacuée à l'extérieur du circuit primaire, de sorte qu'on effectue ainsi une vidange partielle de ce circuit.

Le niveau de l'eau primaire est contrôlé de façon à interrompre la vidange, lorsque le niveau atteint la plage basse de travail du RRA. Cette surveillance a pour but d'éviter un désamorçage des pompes du circuit RRA, par effet vortex.

La vidange partielle du circuit primaire peut également être effectuée par gravité vers le traitement des drains résiduaires 31′ ou par l'intermédiaire de la pompe 35 qui assure une évacuation de l'eau primaire vers le circuit TEP 31. Cette vidange peut également être effectuée à grand débit par l'intermédiaire du PTR en début de vidange.

La surveillance du niveau réel de l'eau primaire présente des difficultés, si bien que, lors d'opérations de vidange du circuit primaire destinées à permettre des interventions dans la boîte à eau 11 d'un générateur de vapeur 10, une vidange excessive peut entraîner une baisse du niveau en-dessous de la plage permettant un fonctionnement des pompes du circuit RRA en toute sécurité. On a ainsi pu observer un désamorçage de l'ensemble des pompes du circuit RRA qui aspirent toutes au même niveau dans le circuit primaire. Dans ce cas, on perd toute possibilité d'évacuer la chaleur résiduelle du coeur du réacteur.

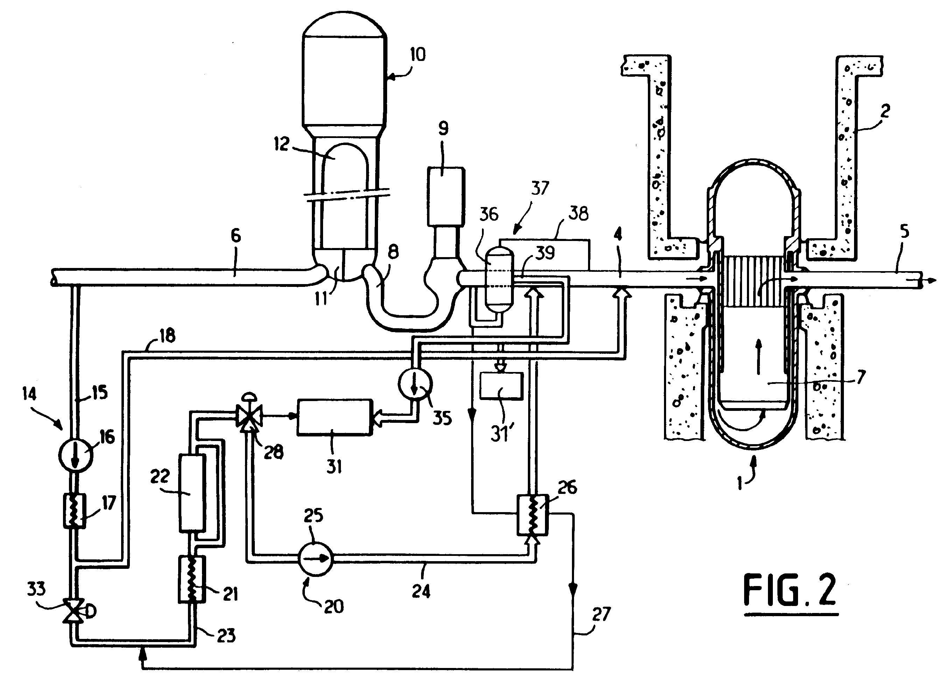

Sur la figure 2, on a représenté une partie du circuit primaire d'un réacteur nucléaire auquel est associé un dispositif de vidange suivant l'invention permettant d'éviter les inconvénients des méthodes de vidange suivant l'art antérieur.

Les éléments correspondants représentés sur les figures 1 et 2 portent les mêmes repères.

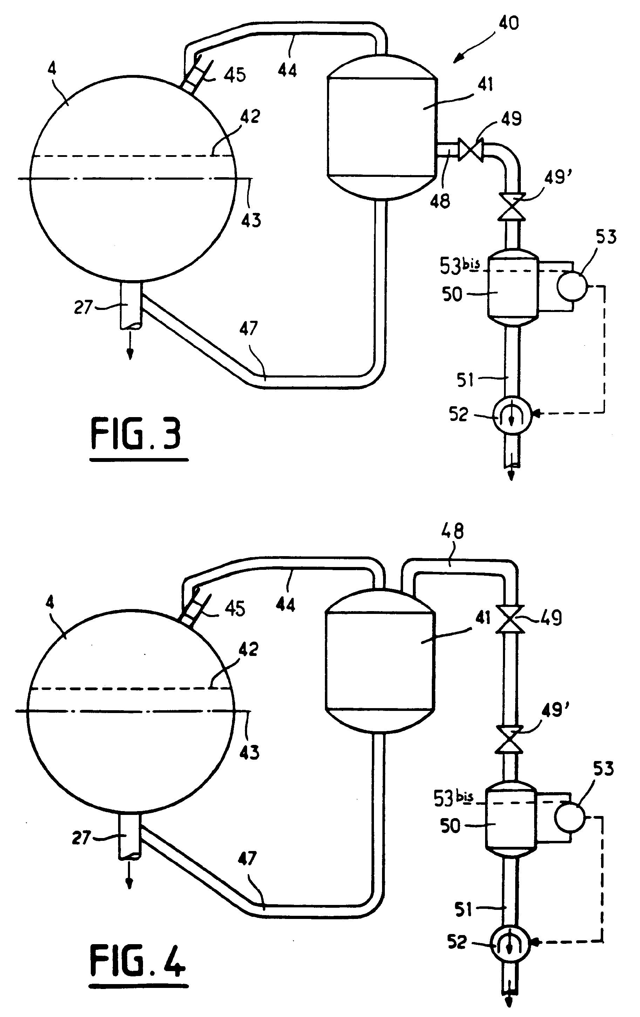

Le dispositif de vidange suivant l'invention représenté sur la figure 2 et désigné de manière générale par le repère 37 sera décrit de manière plus détaillée en se référant aux figures 3 à 6 qui sont relatives à différents modes de réalisation de ce dispositif.

De manière générale, le dispositif de vidange 37 comporte un réservoir 36 ayant une disposition verticale placé au niveau d'une branche froide 4 du circuit primaire du réacteur.

Le réservoir 36 est relié, au voisinage de sa partie inférieure, à la partie inférieure de la branche froide 4, par exemple par une tuyauterie reliée à la tuyauterie de décharge 27 du circuit RCV. Le réservoir 36 est également relié, au voisinage de sa partie supérieure à la partie supérieure de la branche froide 4, par l'intermédiaire d'une tuyauterie de faible section 38.

En outre, une tuyauterie de prélèvement 39 est reliée, à l'une de ses extrémités, à la capacité 36 dans une zone située au voisinage du niveau bas de vidange et, à son autre extrémité, par exemple à la pompe 35 du circuit RPE dont la conduite de refoulement est reliée au circuit TEP 31.

Le réservoir 36 qui est relié en partie basse et en partie haute à la branche froide 4 renferme de l'eau primaire jusqu'à un niveau correspondant au niveau de l'eau primaire dans la branche froide 4.

L'eau primaire est par exemple aspirée à travers le réservoir 36 par la pompe 35 et refoulée dans le circuit TEP 31. On réalise ainsi la vidange du circuit primaire, jusqu'au moment où le niveau dans le réservoir 36 parvient dans la zone du réservoir 36 dans laquelle débouche la canalisation 39.

L'air d'éventage du circuit primaire surmontant l'eau de refroidissement qui pénètre dans la partie supérieure du réservoir 36 par la tuyauterie 38 casse l'écoulement du fluide, arrêtant ainsi la vidange même si l'opérateur oublie d'arrêter la pompe 35. Le niveau de l'eau de refroidissement dans le circuit primaire se stabilise alors à un niveau correspondant à la zone de raccordement de la tuyauterie 39. Ce niveau de raccordement de la tuyauterie 39 correspond précisément au niveau bas auquel on désire limiter la vidange du circuit primaire et qui garantit le fonctionnement des pompes du circuit RRA.

On a obtenu ainsi une vidange partielle du circuit primaire jusqu'à un niveau parfaitement déterminé permettant de maintenir en fonctionnement les pompes du circuit RRA. Le refroidissement du coeur du réacteur peut alors se poursuivre par circulation de l'eau de refroidissement dans la tuyauterie 15 du circuit RRA 14, l'eau refroidie par passage à travers l'échangeur 17 étant ensuite recyclée dans la branche froide 4 du circuit primaire par la tuyauterie 18.

Sur la figure 3, on a représenté un dispositif de vidange 40 selon l'invention dont la structure générale est analogue à celle du dispositif 37 représenté sur la figure 2. Le dispositif 40 comporte un réservoir 41 qui peut être de forme cylindrique fermé à ses extrémités par des fonds bombés, placé dans une disposition verticale au niveau de la branche froide 4 d'une boucle du circuit primaire d'un réacteur nucléaire à eau sous pression. On a représenté en pointillés la trace 42 d'un plan horizontal situé au-dessus du plan médian 43 de la branche froide 4 et correspondant au niveau bas de l'eau de refroidissement dans le circuit primaire en fin de vidange. Ce niveau bas 42 est déterminé de façon à ce que les pompes du circuit RRA du réacteur puissent fonctionner en toute sécurité, pendant et après la vidange du circuit primaire.

Le réservoir 41 est placé de telle sorte que le niveau bas 42 soit situé au-dessus de son fond inférieur.

Le volume intérieur du réservoir 41 est mis en communication avec le volume intérieur de la branche froide 4, par une ligne d'évent 44 traversant le fond supérieur du réservoir 41 à l'une de ses extrémités et reliée à un piquage de traversée 45 de la branche froide 4 situé dans la partie supérieure de cette branche froide. Le piquage 45 peut être constitué, de manière avantageuse, par un piquage déjà existant. De cette manière, on évite le perçage de toute ouverture supplémentaire dans une canalisation primaire.

Le volume intérieur du réservoir 41 est également mis en communication avec la branche froide 4, au niveau de sa partie inférieure, par l'intermédiaire d'une tuyauterie 47 traversant le fond inférieur du réservoir 41 à l'une de ses extrémités et reliée à son autre extrémité, par exemple à la tuyauterie de décharge 27 du circuit RCV ou à une tuyauterie de vidange.

Une tuyauterie de prélèvement d'eau primaire 48 débouche également dans le volume intérieur du réservoir 41 dans le plan 42 correspondant au niveau bas de vidange. La partie inférieure de la tuyauterie 48 est tangente au plan horizontal correspondant au niveau bas 42.

L'installation peut éventuellement être équipée d'une pompe 52.

L'extrémité de la tuyauterie 48 opposée au réservoir 41 pénètre dans un ballon 50 qui est lui-même relié, par l'intermédiaire d'une tuyauterie 51, à une pompe 52 qui peut être constituée par une pompe du circuit RPE du réacteur. Des vannes d'isolement 49 et 49′ sont disposées sur la tuyauterie 48, entre le réservoir 41 et le ballon 50.

Une sonde de niveau 53 permet d'effectuer le repérage d'un niveau d'eau de refroidissement dans le ballon 50 et de commander l'arrêt de la pompe 52.

La vidange du circuit primaire est réalisée en ouvrant les vannes 49 et 49′ et en mettant en fonctionnement la pompe 52. L'eau du circuit primaire est aspirée dans la branche froide 4, à travers le réservoir 41, par l'intermédiaire de la tuyauterie de prélèvement 48.

Du fait que le réservoir 41 est relié à la partie supérieure de la branche primaire par la ligne d'éventage 44 et à la partie inférieure de la branche froide par la conduite 47, l'eau du circuit primaire pénètre dans le réservoir 41 pour être aspirée dans la tuyauterie 48 par la pompe 52. Au cours de la vidange du circuit primaire, le niveau de l'eau de refroidissement s'abaisse progressivement à l'intérieur de la branche froide 4. L'air d'éventage du circuit primaire pénètre dans la partie supérieure de la branche froide et, par l'intermédiaire de la ligne d'éventage 44, dans la partie supérieure du réservoir 41.

Lorsque le niveau dans le réservoir 41 atteint la génératrice inférieure de la tuyauterie 48, l'air d'éventage est aspiré dans la tuyautrie et l'écoulement fluide est rompu. Le détecteur 53 permet d'arrêter la pompe 52 lorsque le niveau d'eau dans la tuyauterie 48 parvient au niveau 53 bis.

La commande de la pompe par un détecteur de niveau permet d'éviter d'endommager la pompe 52 par aspiration d'un mélange d'eau et d'air. Cependant, dans le cas où la pompe ne serait pas commandée par un détecteur de niveau ou que ce détecteur serait défaillant, la sécurité de fonctionnement du dispositif de vidange suivant l'invention serait maintenue, puisque le pompage de l'eau de refroidissement à travers le réservoir 41 serait interrompu au moment où l'extrémité de la tuyauterie 48 se trouverait entièrement émergée au-dessus du niveau bas 42 de l'eau de refroidissement.

Il est à remarquer que le montage du dispositif de vidange suivant l'invention peut être effectué sans avoir à réaliser des piquages de raccordement supplémentaires sur une boucle primaire.

Il est bien sûr possible d'utiliser des piquages de raccordement différents de ceux qui ont été représentés sur la figure 3.

Le piquage de la ligne d'évent peut être raccordé par exemple à la ligne d'aspersion du pressuriseur du circuit primaire permettant de maintenir la pression de l'eau de refroidissement pendant le fonctionnement du réacteur. La ligne de vidange 47 reliant la partie inférieure du réservoir au circuit primaire pourrait être raccordée à un piquage différent de celui de la tuyauterie de décharge 27 du circuit RCV et par exemple à un piquage de raccordement d'un accumulateur du circuit d'injection de sécurité du réacteur (RIS).

Dans tous les cas, le dispositif suivant l'invention permet de réaliser la vidange avec une parfaite sécurité, c'est-à-dire en évitant de faire baisser le niveau dans le circuit primaire en-dessous de la plage de travail basse des pompes du circuit RRA.

A l'issue de la vidange, la partie inférieure des générateurs de vapeur du circuit primaire est entièrement vide d'eau mais le circuit RRA continue à fonctionner de manière satisfaisante.

En outre, le fonctionnement du dispositif de vidange suivant l'invention est entièrement passif, en ce qui concerne le réglage du niveau de vidange et donc extrêmement sûr.

Seule la partie du dispositif de vidange comportant les tuyauteries 44 et 47 et le réservoir 41 se trouve reliée au circuit primaire sans interposition de vanne d'isolement. En conséquence, des contrôles et une surveillance spéciale peuvent se limiter à cette partie du dispositif.

Sur la figure 4, on a représenté une variante de réalisation du dispositif représenté sur la figure 3, les éléments correspondants sur les figures 3 et 4 portant les mêmes repères.

La tuyauterie de prélèvement 48 pénètre verticalement dans le réservoir 41, par sa partie supérieure. La partie verticale de la tuyauterie 48 située à l'intérieur du réservoir 41 présente une longueur telle que son extrémité inférieure ouverte débouche dans le réservoir 41, au niveau bas 42. Le fonctionnement du dispositif suivant la variante de réalisation est sensiblement identique au fonctionnement du dispositif représenté sur la figure 3.

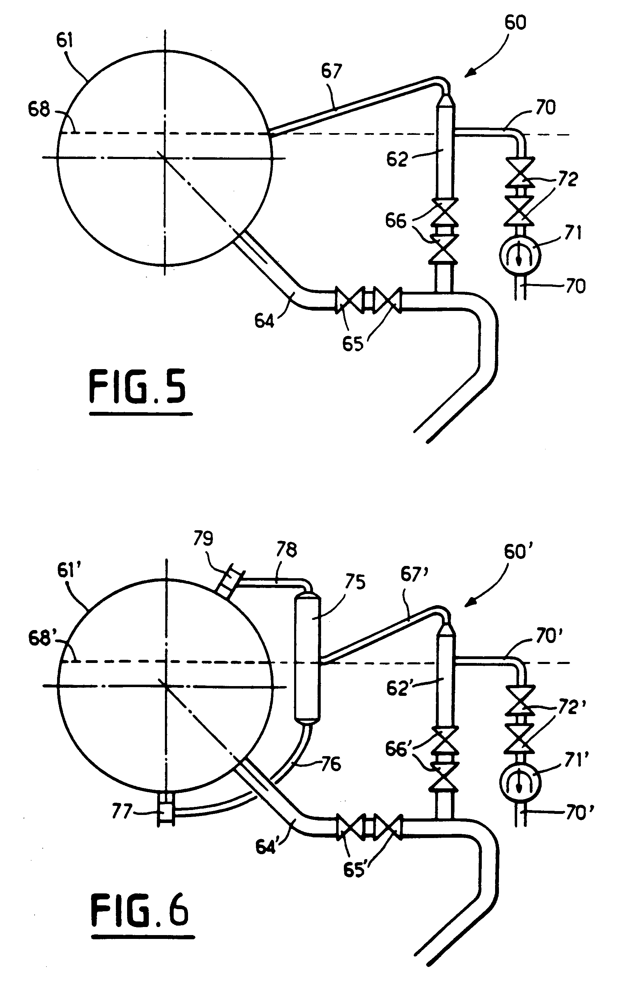

Sur la figure 5, on a représenté un second mode de réalisation d'un dispositif de vidange suivant l'invention associé au circuit primaire d'un réacteur nucléaire à eau sous pression et relié à un constituant 61 de ce circuit primaire qui peut être constitué par une canalisation de grand diamètre telle qu'une branche chaude.

Le dispositif suivant l'invention désigné de manière générale par le repère 60 comporte une capacité 62 qui peut être constituée par un conduit vertical ou un réservoir relié à sa partie inférieure à une tuyauterie 64 en communication avec une partie du circuit primaire. La capacité 62 disposée verticalement au niveau de la canalisation primaire 61 constitue un T de raccordement avec la tuyauterie 64. Deux vannes d'isolement 65 sont disposées sur la tuyauterie 64, entre son point de raccordement au circuit primaire et la capacité 62. Deux vannes d'isolement 66 sont également disposées en amont de la capacité 62 réalisée sous la forme d'une tuyauterie verticale.

La capacité 62 est également reliée à sa partie supérieure, par l'intermédiaire d'une ligne d'évent 67 de faible diamètre (l'orifice à percer sur le circuit primaire est d'un diamètre de l'ordre de 10 mm) à une partie du constituant 61 du circuit primaire, à un niveau 68 correspondant au niveau bas de l'eau de refroidissement dans le circuit primaire.

Ce niveau bas est le niveau en-dessous duquel il n'est plus certain d'assurer un fonctionnement satisfaisant des pompes du circuit RRA et d'éviter tout risque de désamorçage de ces pompes par effet de vortex.

Le dispositif de vidange 60 comporte de plus une tuyauterie de prélèvement 70 reliée à une pompe d'aspiration 71 avec interposition de deux vannes d'isolement 72.

La pompe 71 peut être constituée par la pompe du circuit RPE du réacteur.

L'eau de refroidissement du circuit primaire qui remplit la capacité 62, du fait que cette capacité est reliée au circuit primaire par les tuyauteries 64 et 67 est aspirée par la pompe de vidange 71, par l'intermédiaire de la tuyauterie 70. Le niveau supérieur de l'eau de refroidissement à l'intérieur du constituant 61 du circuit primaire descend progressivement pendant la vidange, cependant que la capacité 62 reste constamment remplie d'eau, du fait que cette capacité reliée au constituant 61 par la ligne d'éventage inclinée 67 constitue un siphon. Le prélèvement d'eau de refroidissement dans la capacité 62 est effectué au niveau bas, la tuyauterie de prélèvement 70 étant reliée à la capacité 62, dans une zone située au niveau du plan 68 correspondant au niveau bas.

Lorsque le niveau de l'eau de refroidissement dans le constituant 61 parvient dans le plan horizontal 68, l'extrémité de la ligne d'éventage 67 débouchant dans le constituant 61 du circuit primaire se trouve émergée et de l'air est aspiré par la ligne d'éventage 67. L'entrée d'air dans la capacité 62 permet d'équilibrer les pressions entre le constituant 61 et la capacité 62, de sorte que le niveau de l'eau de refroidissement dans la capacité 62 s'établit dans le plan horizontal 68 correspondant au niveau bas. L'extrémité de la tuyauterie de prélèvement 70 débouchant dans la capacité 62 se trouve à son tour émergée et de l'air est aspiré par la pompe 71. La vidange s'arrête alors que le niveau de l'eau de refroidissement dans le circuit primaire correspond parfaitement au niveau bas 68.

Il est à remarquer que du fait de la faible section de l'orifice à percer sur le circuit primaire et de la présence de deux vannes d'isolement en série sur la tuyauterie 64, l'ensemble du dispositif de vidange 60 peut être soumis à des contrôles et à une surveillance moins exigeants que ceux auxquels sont soumis des circuits reliés directement au circuit primaire et comportant des tuyauteries de grand diamètre.

Sur la figure 6, on voit une variante de réalisation du dispositif représenté sur la figure 5 permettant d'éviter de prévoir un piquage de raccordement spécial de la ligne d'évent 67′ sur le constituant 61′ du circuit primaire.

La ligne d'évent 67 du dispositif 60 représenté sur la figure 5 doit en effet être raccordée spécialement au constituant 61 du circuit primaire, dans une zone correspondant au niveau bas de vidange 68. Dans le cas du dispositif représenté sur la figure 6, on utilise un réservoir intermédiaire 75 qui peut être de forme cylindrique et disposé verticalement dont l'extrémité inférieure est reliée par une tuyauterie de petit diamètre 76 à un piquage 77 situé à la partie inférieure du constituant 61′ du circuit primaire et dont l'extrémité supérieure est reliée par une tuyauterie 78 à un piquage 79 placé au voisinage de la partie supérieure du constituant 61′.

La vidange du circuit primaire est réalisée par l'intermédiaire de la tuyauterie de prélèvement 70′ sur laquelle peut être disposée une pompe d'aspiration 71′ et qui est reliée à la capacité 62′, dans une zone située au niveau bas de vidange 68′. La ligne d'éventage 67′ débouchant à l'extrémité supérieure de la capacité 62′ est elle-même reliée au réservoir intermédiaire 75, dans une zone située au voisinage du niveau bas 68′.

Du fait que le réservoir 75 est relié à la partie inférieure et à la partie supérieure du constituant 61′ du circuit primaire par les tuyauteries 76 et 78, il s'établit, pendant la vidange, un niveau d'eau de refroidissement dans le réservoir 75 qui est identique au niveau dans le circuit primaire.

Lorsque ce niveau parvient au niveau bas 68′, de l'air est aspiré par la ligne d'éventage 67′ et pénètre dans la capacité 62′. Le niveau dans la capacité 62′ descend jusqu'au niveau bas 68′. De l'air est alors aspiré par la tuyauterie 70′ qui se trouve émergée. La vidange s'arrête avant que le niveau dans le circuit primaire ne descende en-dessous du niveau bas 68′.

Comme dans le cas du dispositif 60 représenté sur la figure 5, une partie du dispositif 60′ représenté sur la figure 6 ne nécessite pas des contrôles et une surveillance extrêmement sévères à cause du faible diamètre des piquages des tuyauteries 76 et 78 sur les tuyauteries 77 et 79 et des doubles vannes d'isolement telles que les vannes 65′.

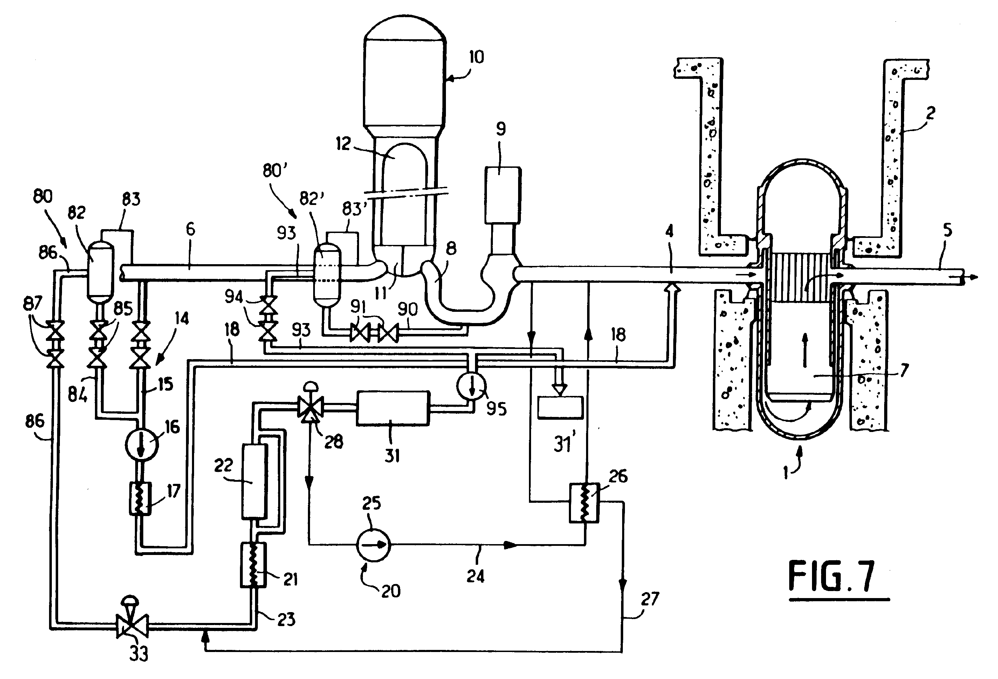

Sur la figure 7, on a représenté la cuve d'un réacteur nucléaire à eau sous pression et une partie du circuit primaire de ce réacteur.

Les éléments correspondants sur la figure 7 d'une part et sur les figures 1 et 2 d'autre part portent les mêmes repères.

On a représenté sur la figure 7, deux dispositifs de vidange suivant l'invention 80 et 80′ qui sont intégrés de manière différente au circuit primaire du réacteur et qui mettent en oeuvre des éléments des circuits auxiliaires du réacteur nucléaire, tels que le circuit RRA (14) et le circuit RCV (20).

Les dispositifs 80 et 80′ comportent chacun une capacité 82 ou 82′ qui est réalisée sous la forme d'un réservoir ou d'un T de raccordement tel que représenté sur les figures 3 et 5.

La capacité 82 du dispositif 80 est reliée à la branche chaude 6 du circuit primaire par une ligne d'éventage de faible diamètre 83, dans une zone de la branche chaude 6 située au voisinage du niveau bas de vidange ou au-dessus de ce niveau bas. La partie inférieure de la capacité 82 est reliée à la partie inférieure de la branche chaude 6 par la tuyauterie 15 du circuit RRA 14 et par une tuyauterie supplémentaire de raccordement 84 sur laquelle sont disposées deux vannes d'isolement 85.

Une tuyauterie de prélèvement d'eau de refroidissement 86 dans la capacité 82 est reliée à cette capacité 82 à un niveau correspondant au niveau bas de vidange.

La tuyauterie de prélèvement 86 sur laquelle sont intercalées deux vannes d'isolement 87 est reliée à la tuyauterie de prélèvement 23 du circuit RCV. La tuyauterie 23 du circuit RCV est elle-même reliée, en aval de l'échangeur de chaleur 21 et du module de purification 22, à une première voie d'une vanne à trois voies 28. Une seconde voie de la vanne 28 est reliée au circuit TEP 31.

L'eau de refroidissement est mise en circulation par la pompe 16 du circuit RRA, de manière à parvenir à la capacité 82, par l'intermédiaire des tuyauteries 15 et 84. L'eau de refroidissement est prélevée dans la capacité 82, par la tuyauterie 86, de manière à parvenir par l'intermédiaire d'une vanne de réglage 33, d'une portion de la canalisation 32, de la tuyauterie 23 du circuit RCV et de la vanne à trois voies 28, dans le circuit TEP. Une pompe peut éventuellement être disposée après les deux vannes 87. L'évacuation d'une partie de l'eau du circuit primaire dans le circuit TEP permet de réaliser la vidange du circuit primaire et d'abaisser le niveau dans ce circuit primaire, jusqu'au niveau bas correspondant au niveau de raccordement de la tuyauterie de prélèvement 86. L'équilibrage des niveaux dans le circuit primaire et dans la capacité 82 est réalisé grâce à la ligne d'éventage 83 si celle-ci est située au-dessus du niveau bas de vidange. Si la ligne d'éventage 83 est située au même niveau que le niveau bas de vidange, la capacité 82 reste pleine jusqu'à ce que le niveau d'eau dans le primaire atteigne le niveau du piquage.

On peut ainsi intégrer le dispositif de vidange suivant l'invention au circuit primaire et aux circuits auxiliaires du réacteur nucléaire avec une modification et des adaptations minimales de ces circuits.

Un exemple d'un second mode d'intégration d'un dispositif de vidange suivant l'invention est illustré par le dispositif 80′.

La partie supérieure de la capacité 82′ du dispositif 80′ est reliée à la branche chaude 6 par une ligne d'éventage de petit diamètre 83′ reliée à la branche chaude 6, dans une zone située au voisinage du niveau bas de vidange ou au-dessus de ce niveau.

La partie inférieure de la capacité 82′ est reliée au point bas de la branche en U 8 du circuit primaire par une tuyauterie de liaison 90. La tuyauterie 90 peut être reliée au piquage du circuit RPE. Deux vannes d'isolement 91 sont disposées sur la tuyauterie 90.

Une tuyauterie 93 de prélèvement d'eau de refroidissement dans la capacité 82′ est reliée à cette capacité dans une zone située au niveau bas de vidange. La tuyauterie de prélèvement 93 sur laquelle sont disposées deux vannes d'isolement 94 est reliée à une pompe 95 du circuit RPE dont la conduite de refoulement est elle-même reliée au circuit TEP. La tuyauterie 93 peut également être reliée au traitement des drains résiduaires 31′.

L'eau de refroidissement du circuit primaire pénètre dans la capacité 82′ par la tuyauterie 90 et est aspirée à travers la capacité 82′ par la tuyauterie de prélèvement 93. L'eau de refroidissement est ensuite évacuée dans le circuit TEP ou le traitement des drains résiduaires, ce qui assure la vidange du circuit primaire. La vidange s'arrête lorsque le niveau dans la capacité 82′ parvient au niveau bas de vidange.

Dans tous les cas, le dispositif suivant l'invention permet de réaliser une vidange du circuit primaire, jusqu'à un niveau bas déterminé, en évitant toute vidange excessive se traduisant par un abaissement du niveau dans le circuit primaire en-dessous du niveau permettant un fonctionnement satisfaisant des pompes du circuit RRA.

Le dispositif suivant l'invention présente une forme simple et un fonctionnement entièrement passif et peut être facilement intégré au circuit primaire et aux circuits auxiliaires du réacteur nucléaire.

L'invention ne se limite pas aux modes de réalisation qui ont été décrits.

C'est ainsi qu'on peut utiliser des capacités de forme quelconque telles que des réservoirs, des portions de tuyauteries, des siphons ou des raccords tubulaires, reliés à un constituant quelconque du circuit primaire, tel qu'une canalisation primaire de grand diamètre, le pressuriseur ou un autre composant.

Dans tous les cas, on évitera dans la mesure du possible de réaliser spécialement des piquages ou autres éléments de raccordement, pour la mise en place du dispositif.

On peut utiliser un seul dispositif de vidange suivant l'invention, disposé sur une seule boucle du circuit primaire ou entre deux constituants de deux boucles différentes du circuit primaire ou encore plusieurs dispositifs de vidange disposés sur des boucles différentes.

Le piquage reliant la partie supérieure de la capacité du dispositif de vidange au circuit primaire suivant l'invention présentera dans certains cas (exemple : figure 5) un diamètre faible, inférieur au diamètre maximal d'une brèche compensable par le circuit RCV du réacteur.

Le dispositif suivant l'invention s'applique à la vidange du circuit primaire de tout réacteur nucléaire refroidi par de l'eau sous pression.

## Revendications

1. Réacteur nucléaire refroidi par de l'eau sous pression comportant une cuve (1) renfermant le coeur (7) du réacteur, un circuit primaire ayant au moins deux boucles comprenant au moins un générateur de vapeur (10), une pompe (9) et des canalisations (4, 5, 6, 8) mettant en communication la partie primaire du générateur de vapeur (10) et la pompe (9) l'une avec l'autre et avec le volume interne de la cuve (1) et un dispositif de vidange du circuit primaire du réacteur à l'arrêt et en cours de refroidissement, par circulation d'eau dans un circuit de refroidissement auxiliaire (14), par l'intermédiaire d'au moins une tuyauterie de prélèvement d'eau (39; 48; 70; 70′; 86, 93) reliée à un circuit d'évacuation (31, 31′) de l'eau prélevée, de manière à ce que le niveau de l'eau dans le circuit primaire à la fin de la vidange reste au moins égal à un niveau bas déterminé, le dispositif de vidange comportant au moins une capacité (36; 41; 62; 62′; 82, 82′) reliée à un constituant (4, 6) du circuit primaire tel qu'une canalisation, en deux points du constituant à des niveaux différents dont l'un est situé en-dessous du niveau bas (42; 68; 68′) et dont l'autre est situé au niveau bas ou au-dessus, caractérisé par le fait que la capacité (36; 41; 62; 62′; 82, 82′) est reliée, au voisinage de sa partie inférieure et au voisinage de sa partie supérieure respectivement, au constituant (4, 6) du circuit primaire en ses deux points et que la tuyauterie de prélèvement (39; 48; 70; 70′; 86, 93) débouche dans la capacité (36; 41; 62; 62′; 82, 82′) à un niveau correspondant au niveau bas, de telle sorte que le niveau de l'eau dans la capacité (36; 41; 62; 62′; 82, 82′) s'équilibre par rapport au niveau dans le circuit primaire lorsque l'eau est au niveau bas dans le circuit primaire, la tuyauterie de prélèvement (39; 48; 70; 70′; 86, 93) débouchant alors dans une partie de la capacité (36; 41; 62; 62′; 82, 82′) recevant de l'air d'éventage du circuit primaire.

2. Réacteur nucléaire suivant la revendication 1, caractérisé par le fait que la capacité (41) est un réservoir dont la partie supérieure est reliée par une ligne d'éventage (44) à faible diamètre à la partie supérieure du constituant (4) du circuit primaire et dont la partie inférieure est reliée par une tuyauterie (47) à la partie inférieure du constituant (4) du circuit primaire, la tuyauterie de prélèvement (48) débouchant dans le réservoir (41) dans une zone située au voisinage du niveau bas (42).

3. Réacteur nucléaire suivant la revendication 2, caractérisé par le fait que la tuyauterie de prélèvement (48) pénètre verticalement par la partie supérieure du réservoir (41) et débouche par sa partie inférieure ouverte dans le réservoir (41), au voisinage du niveau bas (42).

4. Réacteur nucléaire suivant l'une quelconque des revendications 2 et 3, caractérisé par le fait que deux vannes d'isolement (49, 49′) sont disposées en série sur la tuyauterie de prélèvement (48).

5. Réacteur nucléaire suivant l'une quelconque des revendications 2 à 4, caractérisé par le fait que l'extrémité de la tuyauterie de prélèvement (48) opposée au réservoir (41) pénètre dans un ballon (50) de mesure de niveau auquel est associé un capteur de niveau (53) relié à la pompe (52) disposée sur la tuyauterie de prélèvement (48) pour assurer sa commande, en fonction du niveau dans le ballon (50).

6. Réacteur nucléaire suivant la revendication 1, caractérisé par le fait que la capacité (62) est constituée par un élément tubulaire vertical relié, à sa partie inférieure, à une tuyauterie (64) communiquant avec le constituant (61) du circuit primaire, au voisinage de sa partie inférieure et relié, à sa partie supérieure située au-dessus du niveau bas de vidange (68), par une tuyauterie (67) de faible diamètre, au constituant (61) du circuit primaire, dans une zone située au voisinage du niveau bas de vidange (68), la tuyauterie de prélèvement (70) étant reliée à la capacité (62) dans une zone située au voisinage du niveau bas de vidange (68).

7. Réacteur nucléaire suivant la revendication 6, caractérisé par le fait qu'il comporte de plus un réservoir (75) dont la partie inférieure est reliée par une tuyauterie (76) de faible diamètre à la partie inférieure du constituant (61′) du circuit primaire et dont la partie supérieure est reliée par une tuyauterie (78) de faible diamètre à la partie supérieure du constituant (61′) du circuit primaire, la partie supérieure de la capacité (62′) étant reliée par une ligne d'éventage (67′) au réservoir supplémentaire (75), dans une zone située au voisinage du niveau bas de vidange (68′).

8. Réacteur nucléaire suivant l'une quelconque des revendications 6 et 7, caractérisé par le fait que deux vannes d'isolement (65, 65′) sont disposées sur la tuyauterie (64) reliée à la partie inférieure de la capacité (62, 62′).

9. Réacteur nucléaire suivant l'une quelconque des revendications 1 à 8, caractérisé par le fait que la pompe (35; 52; 71; 71′; 95) disposée sur la tuyauterie de prélèvement (39; 48; 70; 70′; 86, 93) est constitué par une pompe du circuit de récupération des purges et évents du réacteur nucléaire.

10. Réacteur nucléaire suivant l'une quelconque des revendications 1 à 8, caractérisé par le fait que la partie inférieure de la capacité (82) est reliée à la partie inférieure du constituant (6) du circuit primaire par l'intermédiaire d'une tuyauterie (15) du circuit de refroidissement à l'arrêt (RRA) du réacteur et que la tuyauterie de prélèvement (86) est reliée à une tuyauterie (23) du circuit de traitement chimique et volumétrique du fluide de refroidissement du réacteur.

11. Réacteur nucléaire suivant l'une quelconque des revendications 1 à 9, caractérisé par le fait que la partie inférieure de la capacité (82′) est reliée à une branche intermédiaire en U (8) du circuit primaire située entre un générateur de vapeur (10) et une pompe primaire (9) et que la tuyauterie de prélèvement (93) est reliée à une pompe (95) du circuit de récupération des purges et évents du réacteur nucléaire.

12. Réacteur nucléaire suivant l'une quelconque des revendications 1 à 11, caractérisé par le fait que le circuit d'évacuation de l'eau prélevée est constitué par le circuit de traitement des effluents primaires du réacteur ou le traitement des drains résiduaires du réacteur.

## Patentansprüche

1. Druckwasserkernreaktor mit einem Behälter (1) der den Reaktorkern (7) umschließt, einem Primärkreislauf mit mindestens zwei Kreisen, die mindestens einen Dampferzeuger (10), eine Pumpe (9) und Rohrleitungen (4, 5, 6, 8) aufweisen, die den Primärteil des Dampferzeugers (10) und die Pumpe (9) miteinander und mit dem Innenvolumen des Behälters (1) verbinden und mit einer Ablaßvorrichtung des Primärkreises des Reaktors bei dessen Stillstand und während des Abkühlens durch Zirkulation von Wasser in einem Hilfskühlkreislauf (14) über mindestens ein Wasserentnahmeleitungssystem (39, 48, 70, 70′; 86, 93), welches an einen Entleerungskreis (31, 31′) entnommenen Wassers verbunden ist, derart, daß der Pegel des Wassers im Primärkreis am Ende des Ablassens mindestens gleich einem vorbestimmten niedrigen Pegel entspricht, wobei die Ablaßvorrichtung wenigstens einen Speicher (36; 41; 62; 62′; 82, 82′) aufweist, der an einen Bestandteil (4, 6) des Primärkreises, wie beispielsweise einem Rohrleitungssystem an zwei Stellen dieses Bestandteils angeschlossen ist, mit unterschiedlicher Höhe, von denen eines unter dem unteren Pegel (42, 68; 68′) und von dem das andere auf dem unteren Pegel oder darüber angeordnet ist,
dadurch gekennzeichnet, daß
der Speicher (36; 41; 62; 62′; 82, 82′) in der Nähe des unteren Teils bzw. in der Nähe des oberen Teils des Bestandteils (4, 6) des Primärkreises an seinen beiden Stellen verbunden ist und dadurch, daß das Entnahmeleitungssystem (39; 48; 70; 70′; 86, 93) in dem Speicher (36; 41; 62; 62′; 82, 82′) auf einer Höhe mündet, die dem unteren Pegel entspricht derart, daß der Wasserstand in dem Speicher (36; 41; 62; 62′; 82, 82′) sich im Verhältnis zu dem Pegel im Primärkreis ausgleicht, wenn das Wasser im Primärkreis den niedrigen Pegelstand einnimmt, wobei das Entnahmeleitungssystem (39; 48; 70; 70′; 86, 93) in einem Teil des Speichers (36; 41; 62; 62′; 82, 82′) mündet, der die Belüftung des Primärkreises aufnimmt.

2. Kernreaktor nach Anspruch 1, dadurch gekennzeichnet, daß der Speicher (41) ein Behälter ist, dessen oberer Bereich mit einer Ablaßleitung (44) mit geringem Durchmesser mit dem oberen Teil (4) des Primärkreises verbunden ist und dessen unterer Teil über ein Rohrleitungssystem (47) mit dem unteren Teil des Primärkreislaufs verbunden ist, wobei das Ablaßrohrleitungssystem (48) in dem Behälter (41) in einem Bereich mündet, der in der Nähe des niedrigen Pegels (42) liegt.

3. Kernreaktor nach Anspruch 2, dadurch gekennzeichnet, daß das Ablaßrohrleitungssystem (48) senkrecht durch den oberen Teil des Behälters (41) durchdringt und mit seinem unteren offenen Teil in dem Behälter (41) in der Nähe des niedrigen Pegels (42) mündet.

4. Kernreaktor nach einem der Ansprüche 2 und 3, dadurch gekennzeichnet, daß zwei Abschottventile (49, 49′) in Reihe in dem Entnahmeleitungssystem (48) angeordnet sind.

5. Kernreaktor nach einem der Ansprüche 2 bis 4, dadurch gekennzeichnet, daß das den Behälter (41) entgegengesetzt gelegene Ende des Entnahmerohrleitungssystems (48) in einem kugelförmigen Behälter zur Messung des Pegels mündet, an dem ein Pegelerfasser (53) angeschlossen ist, der mit der Pumpe (52) verbunden ist, die im Entnahmerohrleitungssystem (48) vorgesehen ist, um dessen Steuerung in Abhängigkeit von dem Pegel in dem kugelförmigen Behälter (50) zu gewährleisten.

6. Kernreaktor nach Anspruch 1, dadurch gekennzeichnet, daß der Speicher (62) aus einem vertikalen Rohrelement besteht, welches mit seinem unteren Teil an einem Rohrleitungssystem (64) angeschlossen ist, welches mit den Bestandteilen (61) des Primärkreises in der Nähe dessen unteren Teils angeschlossen ist und der mit seinem oberen Teil, welcher oberhalb des Ablaßpegels (68) gelegen ist, durch ein Rohrleitungssystem (67) mit geringem Durchmesser mit den Bestandteilen (61) des Primärkreises verbunden ist, in einem Bereich, der in der Nähe des niedrigen Ablaßpegels (68) liegt, wobei das Entnahmerohrleitungssystem (70) mit dem Speicher (62) in einem Bereich verbunden ist, der in der Nähe des niedrigen Ablaßpegels (68) liegt.

7. Kernreaktor nach Anspruch 6, gekennzeichnet durch einen Behälter (75), dessen unterer Teil über ein Rohrleitungssystem (76) mit geringem Durchmesser an den unteren Teil der Bestandteile (61′) des Primärkreislaufs verbunden ist und dessen oberer Teil über ein Rohrleitungssystem (78) mit geringem Durchmesser an den oberen Teil der Bestandteile (61′) des Primärkreislaufes verbunden ist, wobei der obere Teil des Speichers (62′) über eine Ablaßleitung (67′) mit dem zusätzlichen Behälter (75) in einem Bereich verbunden ist, der in der Nähe des niedrigen Ablaßpegels (68′) liegt.

8. Kernreaktor nach einem der Ansprüche 6 und 7, dadurch gekennzeichnet, daß zwei Abschottventile (65, 65′) in dem Rohrleitungssystem (64) angeordnet sind, welches mit dem unteren Teil des Speichers (62, 62′) verbunden ist.

9. Kernreaktor nach einem der Ansprüche 1 bis 8, dadurch gekennzeichnet, daß die Pumpe (35; 52; 71; 71′, 95), welche in dem Entnahmerohrleitungssystem (39, 43, 78, 78′; 86, 93) angeorndet ist aus einer Pumpe des Kreises zur Wiedergewinnung der Abluft des Kernreaktors besteht.

10. Kernreaktor nach einem der Ansprüche 1 bis 8, dadurch gekennzeichnet, daß der untere Teil der Kapazität (82) mit dem unteren Teil der Bestandteile (6) des Primärkreises über ein Rohrleitungssystem (15) des Kühlkreislaufs in Stillstand (RRA) des Reaktors verbunden ist und dadurch, daß das Ablaßrohrleitungssystem (86) an ein Rohrleitungssystem (23) des Kreises zur chemischen und maßanalytischen Behandlung des Kühlmittels des Reaktors verbunden ist.

11. Kernreaktor nach einem der Ansprüche 1 bis 9, dadurch gekennzeichnet, daß der untere Teil der Kapazität (82′) mit einer U-förmigen Zwischenleitung (8) des Primärkreises verbunden ist, welche zwischen einem Dampferzeuger (10) und einer Primärpumpe (9) angeordnet ist und dadurch, daß das Ablaßrohrleitungssystem (93) an eine Pumpe (95) des Abluftwiedergewinnungskreises des Kernreaktors verbunden ist.

12. Kernreaktor nach einem der Ansprüche 1 bis 11, dadurch gekennzeichnet, daß das Rohrleitungssystem zum Ablassen des entnommenen Wassers aus dem Kreis zur Behandlung der Abwässer des Primärkreises des Reaktors oder zur Behandlung der Restabwässer des Reaktors besteht.

## Claims

1. Pressurised water-cooled nuclear reactor comprising a tank (1) containing the core (7) of the reactor, a primary circuit having at least two loops comprising at least one steam generator (10), a pump (9) and pipes (4, 5, 6, 8) enabling the primary part of the steam generator (10) and the pump (9) to communicate with one another and with the interior of the tank (1) and a device for draining the primary circuit of the reactor when it is shut down and in the course of cooling, by circulating water in an auxiliary cooling circuit (14) by means of at least one water sampling pipe (39; 48; 70; 70′; 86, 93) connected to an evacuation circuit (31, 31′) for the sampled water, so that the level of water in the primary circuit at the end of draining remains at least equal to a predetermined low level, the draining device comprising at least one container (36; 41; 62; 62′; 82, 82′) connected to a component (4, 6) of the primary circuit such as a pipe, at two points of the component at different levels, one of which is located below the low level (42, 68; 68′) whilst the other is located at the low level or above, characterised in that the container (36; 41; 62; 62′; 82, 82;) is connected, in the vicinity of its lower part and in the vicinity of its upper part, respectively, to the component (4, 6) of the primary circuit at these two points and in that the sampling pipe (39; 48; 70; 70′; 86, 93) opens into the container (36; 41; 62; 62′; 82, 82′) at a level corresponding to the low level, so that the level of water in the container (36; 41; 62; 62′; 82, 82′) is equilibrated relative to the level in the primary circuit when the water is at the low level in the primary circuit, the sampling pipe (39; 48; 70; 70′; 86, 93) then opening into a part of the container (36; 41, 62; 62′; 82, 82′) receiving vented air from the primary circuit.

2. Nuclear reactor according to claim 1, characterised in that the container (41) is a reservoir the upper part of which is connected by a small-diameter venting line (44) to the upper part of the component (4) of the primary circuit and the lower part of which is connected by a pipe (47) to the lower part of the component (4) of the primary circuit, the sampling pipe (48) opening into the reservoir (41) in a zone situated near the lower level (42).

3. Nuclear reactor accordinq to claim 2, characterised in that the sampling pipe (48) penetrates vertically through the upper part of the reservoir (41) and opens out, at its open lower end, into the reservoir (41), near to the lower level (42).

4. Nuclear reactor according to one of claims 2 and 3, characterised in that two isolating valves (49, 49′) are mounted in series on the sampling pipe (48).

5. Nuclear reactor accordinq to any of claims 2 to 4, characterised in that the end of the sampling pipe (48) opposite the reservoir (41) goes into a level-measuring balloon (50) which is associated with a level sensor (53) connected to the pump (52) mounted on the sampling pipe (48) for controlling it, as a function of the level in the balloon (50).

6. Nuclear reactor according to claim 1, characterised in that the container (62) consists of a vertical tubular element connected, at its lower end, to a pipe (64) communicating with the component (61) of the primary circuit, in the vicinity of its lower end and connected, at its upper end above the low draining level (68), by a small-diameter pipe (67), to the component (61) of the primary circuit, in a zone situated close to the low draining level (68), the sampling pipe (70) being connected to the container (62) in a zone located in the vicinity of the low draining level (68).

7. Nuclear reactor according to claim 6, characterised in that it further comprises a reservoir (75) the lower part of which is connected, by a small-diameter pipe (76), to the lower part of the component (61′) of the primary circuit and the upper part of which is connected, by a small-diameter pipe (78), to the upper part of the component (61′) of the primary circuit, the upper part of the container (62′) being connected by a venting line (67′) to the supplementary reservoir (75) in a zone located near the low draining level (68′).

8. Nuclear reactor according to one of claims 6 and 7, characterised in that two isolating valves (65, 65′) are mounted on the pipe (64) connected to the lower part of the container (62, 62′).

9. Nuclear reactor according to any one of claims 1 to 8, characterised in that the pump (35; 52; 71; 71′, 95) mounted on the sampling pipe (39; 48; 70; 70′; 86, 93) consists of a pump of the circuit for recovering material purged and vented from the nuclear reactor.

10. Nuclear reactor according to any one of claims 1 to 8, characterised in that the lower part of the container (82) is connected to the lower part of the component (6) of the primary circuit via a pipe (15) of the shutdown cooling circuit (RRA) of the reactor and in that the sampling pipe (86) is connected to a pipe (23) of the circuit for chemical and volumetric treatment of the reactor cooling fluid.

11. Nuclear reactor according to any one of claims 1 to 9, characterised in that the lower part of the container (82′) is connected to a U-shaped intermediate branch (8) of the primary circuit located between a steam generator (10) and a primary pump (9) and in that the sampling tube (93) is connected to a pump (95) of the circuit for recovering material purged and vented from the nuclear reactor.

12. Nuclear reactor according to any one of claims 1 to 11, characterised in that the draining circuit for the sampled water consists of the circuit for treating the primary effluent from the reactor or for treating the residual drainage from the reactor.
